# EUROPEAN PATENT APPLICATION

(11) **EP 4 773 233 A1**
(43) Date of publication of application: **08.07.2026**
(21) Application number: 25841585.0
(22) Date of filing: 18.07.2025
(51) Int. Cl.: H01M 4/36, H01M 4/48, H01M 4/583, H01M 4/525, H01M 4/505, H01M 4/62, H01M 10/052, H01M 10/04, H01M 4/02

(54) **NEGATIVE ELECTRODE FOR SECONDARY BATTERY AND SECONDARY BATTERY INCLUDING SAME**

(30) Priority: 19.07.2024 KR 20240095561; 16.07.2025 KR 20250095796
(71) Applicant: LG Energy Solution, Ltd., Seoul 07335 (KR)
(72) Inventor: LEE, Byeong Hoon, Daejeon 34122 (KR); KIM, Jung Hoon, Daejeon 34122 (KR); KIM, Hee Jin, Daejeon 34122 (KR)
(74) Representative: Plasseraud IP
(86) International application number: PCT/KR2025/010622
(87) International publication number: WO 2026/019294

(57) **Abstract**

The negative electrode for a secondary battery according to some embodiments includes: a current collector; a first active material layer on the current collector; and a second active material layer on the first active material layer, wherein the first active material layer includes a first silicon-based active material and a first conductive material, the second active material layer includes a second silicon-based active material and a second conductive material, wherein the content of the first silicon-based active material is greater than the content of the second silicon-based active material, and the ratio (S_{ct}/Sₛₜ) of the sum of the surface areas of the first and second conductive materials S_{c1} to the sum of the surface areas of the first and second silicon-based active materials Sₛₜ may be in the range of 0.8 to 1.2. Some embodiments of the present disclosure exhibit excellent capacity, cycle characteristics, low-temperature charge/discharge performance, and rapid charge/discharge performance.

## Description

### [Technical Field]

The present disclosure relates to a negative electrode for a secondary battery and a secondary battery including the same.

Specifically, the present disclosure relates to a secondary battery negative electrode having a dual-layer structure including a silicon-based active material and a secondary battery including the same.

This application claims the benefit of priority to Korean Patent Application No. 10-2024-0095561, filed on July 19, 2024 and Korean Patent Application No. 10-2025-0095796, filed on July 16, 2025, and the entire contents of Korean Patent Application No. 10-2023-0074587 and No. 10-2025-0095796 are hereby incorporated by reference.

### [Background]

The use of secondary batteries, capable of repeated long-term use through recharging, is increasing to reduce dependence on fossil fuels and decrease carbon emissions. Secondary batteries are used in various fields such as vehicles, portable electronic devices, and ESS (Energy Storage Systems). Among secondary batteries, lithium secondary batteries, which use lithium ions as ions, are particularly favored for their excellent energy density and lifespan, leading to active research and development.

The fundamental performance characteristics of lithium secondary batteries, such as capacity, output, and lifespan, are significantly influenced by the negative electrode active material included in lithium secondary battery. Carbon-based active materials are primarily used as negative electrode materials; however, these materials have a theoretical capacity of approximately 372 mAh/g, limiting their ability to enhance the energy density of lithium secondary batteries. Therefore, attempts are being made to use silicon-based active materials as negative electrode active materials, which have a theoretical capacity of approximately 4010 mAh/g, more than ten times higher than carbon-based active materials. However, silicon-based active materials have a high volume change rate exceeding 300% during charge-discharge cycles. This causes the conductive path to break during continuous charge-discharge processes, preventing them from functioning effectively as active materials.

### [Summary]

### [Technical Problem]

The technical problem addressed by the technical concept of the present disclosure is to provide a secondary battery negative electrode with excellent capacity, cycle characteristics, low-temperature charge/discharge performance, and rapid charge/discharge performance, and a secondary battery including the same.

### [Technical Solution]

Some embodiments of the present disclosure that can solve the aforementioned problems are as follows.

The negative electrode for a secondary battery includes: a current collector; a first active material layer on the current collector; and a second active material layer on the first active material layer, wherein the first active material layer includes a first silicon-based active material and a first conductive material, the second active material layer includes a second silicon-based active material and a second conductive material, wherein the content of the first silicon-based active material is greater than the content of the second silicon-based active material, and the ratio (S_{ct}/Sₛₜ) of the sum of the surface areas of the first and second conductive materials S_{ct} to the sum of the surface areas of the first and second silicon-based active materials Sₛₜ may be in the range of 0.8 to 1.2.

In some embodiments, the content of the first conductive material may be greater than the content of the second conductive material.

In some embodiments, the ratio (S_{c1}/Sₛ₁) of the sum of the surface areas of the first conductive material S_{c1} to the sum of the surface areas of the first silicon-based active material Sₛ₁ may be in the range of 0.8 to 1.2, and the ratio S_{c2}/Sₛ₂ of the sum of the surface areas of the second conductive material S_{c2} to the sum of the surface areas of the second silicon-based active material Sₛ₂ may be the in range of 0.8 to 1.2.

In some embodiments, the ratio (S_{c1}/Sₛ₁) of the sum of the surface areas of the first conductive material S_{c1} to the sum of the surface areas of the first silicon-based active material Sₛ₁ may be in the range of 0.9 to 1.1, and the ratio S_{c2}/Sₛ₂ of the sum of the specific surface areas of the second conductive material S_{c2} to the sum of the surface areas of the second silicon-based active material Sₛ₂ may be in the range of 0.9 to 1.1.

In some embodiments, the first and second conductive materials may include linear conductive materials.

In some embodiments, the linear conductive material may include one or more among carbon nanotubes (CNT), carbon nanofibers (CNF), and vapor-grown carbon fibers (VGCF).

In some embodiments, the linear conductive material may have an average length of 5 µm or more.

In some embodiments, the first active material layer includes a first binder, the second active material layer includes a second binder, and the viscosity of the first binder may be greater than the viscosity of the second binder.

In some embodiments, the viscosity of the first binder may be at least ten times greater than the viscosity of the second binder.

In some embodiments, the first active material layer includes a first carbon-based active material, the second active material layer includes a second carbon-based active material, the first and second carbon-based active materials include natural graphite and synthetic graphite, wherein the content of natural graphite within the first carbon-based active material may be greater than the content of synthetic graphite, and the content of synthetic graphite within the second carbon-based active material may be greater than the content of natural graphite.

A secondary battery according to some embodiments include: a positive electrode, a negative electrode, and a separator interposed between the positive electrode and the negative electrode, wherein the negative electrode may be the aforermentioned negative electrode for secondary battery.

In some embodiments, the positive electrode may include a positive electrode active material represented by the following Chemical Formula 1:

[Chemical Formula 1] LiₚNi_{1-q-r-s}Co_{q}MnᵣM¹ₛO₂

In Chemical Formula 1,
M¹ is one or more elements selected from the group consisting of Al, Zr, Ti, Mg, Ta, Nb, Mo, and Cr, and
0.9≤p≤1.5, 0≤q≤1, 0≤r≤0.5, 0≤s≤0.1, 0≤q+r+s≤1.

In some embodiments, the positive electrode may include a positive electrode active material represented by the following Chemical Formula 2:

[Chemical Formula 2] Li₁₊ₐFe_{1-b}M²_{b}(PO_{4-c})X_{c}

In Chemical Formula 2,
M² comprises one or two or more elements selected from the group consisting of Al, Mg, Ni, Co, Mn, Ti, Ga, Cu, V, Nb, Zr, Ce, In, Zn, and Y,
X comprises one or two or more elements selected from the group consisting of F, S, and N, and
a, b, and c are within the ranges -0.5 ≤ a ≤ 0.5, 0 ≤ b ≤ 0.9, and 0 ≤ x ≤ 0.8, respectively.

In some embodiments, the secondary battery may be a cylindrical secondary battery.

In some embodiments, the secondary battery may be a secondary battery for automotive use or for an ESS (Energy Storage System).

### [Advantageous Effects]

Some embodiments of the present disclosure exhibit excellent capacity, cycle characteristics, low-temperature charge/discharge performance, and rapid charge/discharge performance.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a drawing showing the results of Experimental Example 1.
FIG. 2 is a drawing showing the results of Experimental Example 1.
FIG. 3 is an image of the first active material layer (lower layer) and the second active material layer (upper layer) captured by SEM in Experimental Example 2.
FIG. 4 is an image of the first active material layer (lower layer) captured by SEM in Experimental Example 4.

### [Best Mode for Carrying out the Disclosure]

The terms and words used herein shall not be interpreted as limited to their conventional or dictionary meanings, but shall be interpreted in a meaning consistent with the technical concept of the present disclosure, based on the principle that the inventor may appropriately define the meaning of terms and words to describe his own invention in the best possible manner.

In this specification, terms such as "include" or "have" are intended to specify the presence of the features, numbers, steps, operations, components, parts, or combinations thereof described herein, and should not be understood as precluding the presence or possibility of adding one or more other features, numbers, steps, operations, components, parts, or combinations thereof. Furthermore, when a layer, film, region, plate, or similar part is described as being "on" another part, this includes not only being "directly above" the other part but also cases where another part exists between them. Conversely, when a layer, film, region, plate, or similar part is described as being "under" another part, this includes not only being "directly below" the other part but also cases where another part exists between them.

The embodiments and drawings are merely examples of the present disclosure and do not represent all the technical ideas of the present disclosure; therefore, it should be understood that various equivalents and modifications may exist that can replace them.

In describing the present disclosure, detailed explanations of known configurations or functions are omitted where such descriptions are deemed to obscure the essence of the present disclosure.

### Negative electrode for Secondary Battery

The negative electrode for a secondary battery may include a current collector, a first active material layer, and a second active material layer. The first active material layer may be positioned on the current collector. The second active material layer may be positioned on the first active material layer. The first active material layer may be referred to as the "lower layer." The second active material layer may be referred to as the "upper layer."

The current collector may include a material that is conductive without causing chemical changes in the battery. As non-limiting examples, the current collector may include copper, stainless steel, aluminum, nickel, titanium, or baked carbon. In some embodiments, the current collector may include copper. As non-limiting examples, the current collector may include copper or stainless steel whose surface is treated with carbon, nickel, titanium, silver, etc. The surface of the current collector may have a micro-irregular structure formed to enhance adhesion with the active material layer. The shape of the current collector may be a sheet, film, foil, net, porous body, foam, or nonwoven fabric. The thickness of the current collector may be in the range of about 3 µm to about 500 µm. The thickness of the current collector may be determined based on the target output, target capacity, etc., of the battery.

The first active material layer may include a first silicon-based active material and a first conductive material. The second active material layer may include a second silicon-based active material and a second conductive material. Since both the first and second active material layers include silicon-based active materials, some embodiments may exhibit high capacity.

The thickness of each of the first and second active material layers may be in the range of about 8 µm to 240 µm. The thickness ratio of the first active material layer to the second active material layer may be in the range of approximately 80:20 to approximately 20:80. The thickness of each of the first active material layer and the second active material layer may be determined based on the target output, target capacity, etc., of the battery. In some embodiments, the thickness of the first active material layer and the thickness of the second active material layer may be substantially the same.

The first silicon-based active material and the second silicon-based active material may each include one or more of Si, silicon oxide particles (SiOₓ, 0<x≤1), Si-metal alloys, and silicon-carbon composites. The first silicon-based active material and the second silicon-based active material may each include a carbon coating layer formed on the outer surface of the silicon-based active material. In some embodiments, the first silicon-based active material and the second silicon-based active material may each include silicon oxide particles (SiOₓ, 0<x≤1). In some embodiments, the first silicon-based active material and the second silicon-based active material may each include SiO.

In some embodiments, the content of the first silicon-based active material may be greater than the content of the second silicon-based active material. That is, the silicon-based active material may be more abundantly contained in the lower layer than in the upper layer. As lithium ion diffusion decreases during low-temperature charging and discharging, lithium ions become concentrated in the upper layer. At this time, if the silicon-based active material is contained more in the upper layer than in the lower layer, or if the silicon-based active material is contained equally in both layers, the silicon-based active material in the upper layer may be excessively consumed. Excessive consumption of silicon-based active material can lead to the formation of crystalline structures (e.g., LiₓSi), which cause degradation of the silicon-based active material, and can increase the formation of high-resistance SEI (solid electrolyte interphase) and byproducts.

In some embodiments, the weight ratio of the first silicon-based active material to the second silicon-based active material may be in the range of 51:49 to 99:1. In some embodiments, the weight ratio of the first silicon-based active material to the second silicon-based active material may be 52:48 or greater, 53:47 or greater, 54:46 or greater, 55:45 or greater, 56:44 or greater, 57:43 or greater, 58:42 or greater, 59:41 or greater, or 60:40 or greater. In some embodiments, the weight ratio of the first silicon-based active material to the second silicon-based active material may be 98:2 or less, 97:3 or less, 96:4 or less, 95:5 or less, 94:6 or less, 93:7 or less, 92:8 or less, 91:9 or less, 90:10 or less, 89:11 or less, 88:12 or less, 87:13 or less, 86:14 or less, or 85:15 or less.

In some embodiments, the sum of the content of the first silicon-based active material and the content of the second silicon-based active material, based on the sum of the weight of the first active material layer and the weight of the second active material layer, may be in the range of 5 wt% to 30 wt%. In some embodiments, the sum of the content of the first silicon-based active material and the content of the second silicon-based active material, based on the sum of the weight of the first active material layer and the weight of the second active material layer, may be 6 wt% or more, 7 wt% or more, 8 wt% or more, 9 wt% or more, or 10 wt% or more. In some embodiments, based on the sum of the weight of the first active material layer and the weight of the second active material layer, the sum of the content of the first silicon-based active material and the content of the second silicon-based active material may be 29 wt% or less, 28 wt% or less, 27 wt% or less, 26 wt% or less, 25 wt% or less, 24 wt% or less, 23 wt% or less, 22 wt% or less, 21 wt% or less, or 20 wt% or less. The sum of the content of the first silicon-based active material and the content of the second silicon-based active material may be determined based on the target output, target capacity, target life, etc., of the battery.

The first conductive material and the second conductive material may each include a material having conductivity without inducing chemical changes in the battery. As non-limiting examples, the first conductive material and the second conductive material may each include one or more of a point-type conductive material and a linear conductive material. The point-type conductive material may include one or more among carbon black such as acetylene black; ketjen black; channel black; furnace black; lamp black; thermal black, fluorocarbon, aluminum powder, nickel powder, zinc oxide, potassium titanate, titanium oxide, and polyphenylene. The linear conductive material may include one or more of carbon nanotubes (CNT), carbon nanofibers (CNF), and vapor-grown carbon fibers (VGCF). The carbon nanotubes may include one or more among single-walled carbon nanotubes (SWCNT) and multi-walled carbon nanotubes (MWCNT). In some embodiments, the first conductive material and the second conductive material may each include single-walled carbon nanotubes.

In some embodiments, the first conductive material and the second conductive material may each include linear conductive material. Linear conductive material may be advantageous over point-type conductive material for maintaining the conductive network of silicon-based active materials, which undergo significant volume changes during charging and discharging. The average length of the linear conductive material may be in the range of about 5 µm to about 20 µm. If the average length of the linear conductive material is too short, the ability to maintain the conductive network of the silicon-based active material may be reduced.

The average length of linear conductive materials is the arithmetic mean of their lengths and can be calculated from images captured by a scanning electron microscope (SEM). That is, the average length can be determined by extracting several samples from SEM images of the conductive materials, measuring the lengths of the extracted samples, and then calculating their arithmetic mean. As a specific example, the average length of SWCNTs can be calculated as follows. A solution (1% solid weight) of SWCNTs and carboxymethyl cellulose (CMC) added to water at a weight ratio of 40:60 is diluted 1000-fold with water. 20 mL of the diluted solution is filtered, then the filter containing the SWCNTs is dried, and is imaged using SEM. Several samples are extracted from the SEM image, the length of the extracted samples is measured, and the average length of the SWCNTs is calculated by taking the arithmetic mean.

In some embodiments, the content of the first conductive material may be greater than the content of the second conductive material. That is, the conductive material may be more abundantly contained in the lower layer than in the upper layer. If the conductive material is more abundantly contained in the lower layer than in the upper layer, the porosity of the upper layer may become greater than that of the lower layer, and the pore structure of the upper layer may be improved relative to that of the lower layer. Accordingly, the rapid charge-discharge performance in some embodiments may be enhanced.

In some embodiments, the weight ratio of the first conductive material to the second conductive material may be in the range of 51:49 to 99:1. In some embodiments, the weight ratio of the first conductive material to the second conductive material may be 52:48 or greater, 53:47 or greater, 54:46 or greater, 55:45 or greater, 56:44 or greater, 57:43 or greater, 58:42 or greater, 59:41 or greater, or 60:40 or greater. In some embodiments, the weight ratio of the first conductive material to the second conductive material may be 98:2 or less, 97:3 or less, 96:4 or less, 95:5 or less, 94:6 or less, 93:7 or less, 92:8 or less, 91:9 or less, or 90:10 or less.

In some embodiments, the sum of the contents of the first conductive material and the second conductive material, based on the sum of the weights of the first active material layer and the second active material layer, may be in the range of 0.005 wt% to 2 wt%. In some embodiments, the sum of the contents of the first conductive material and the second conductive material, based on the sum of the weights of the first active material layer and the second active material layer, may be 0.01 wt% or more, 0.02 wt% or more, 0.03 wt% or more, or 0.04 wt% or more. In some embodiments, based on the sum of the weight of the first active material layer and the weight of the second active material layer, the sum of the content of the first conductive material and the content of the second conductive material may be 1.5 wt% or less, 1.0 wt% or less, 0.5 wt% or less, 0.4 wt% or less, 0.3 wt% or less, 0.2 wt% or less, or 0.1 wt% or less. The content of the first conductive material and the content of the second conductive material can be appropriately selected considering the values of S_{ct}/Sₛₜ, S_{c1}/Sₛ₁, or S_{c2}/Sₛ₂ described below.

In this specification, the sum of the surface areas of the first and second silicon-based active materials Sₛₜ is the sum of the specific surface area (m²/g) of the first silicon-based active material multiplied by the weight (g) of the first silicon-based active material and the specific surface area (m²/g) of the second silicon-based active material multiplied by the weight (g) of the second silicon-based active material. In this specification, the sum of the surface areas of the first and second conductive materials S_{ct} means the sum of the product of the specific surface area (m²/g) of the first conductive material by the weight (g) of the first conductive material and the product of the specific surface area (m²/g) of the second conductive material by the weight (g) of the second conductive material. In this specification, the sum of the surface areas of the first silicon-based active material Sₛ₁ means the value obtained by multiplying the specific surface area (m²/g) of the first silicon-based active material by the weight (g) of the first silicon-based active material. In this specification, the sum of the surface area of the second silicon-based active material Sₛ₂ means the product of the specific surface area (m²/g) of the first silicon-based active material and the weight (g) of the second silicon-based active material. In this specification, the sum of the surface area of the first conductive material S_{c1} means the value obtained by multiplying the specific surface area (m²/g) of the first conductive material by the weight (g) of the first conductive material. In this specification, the sum of the surface area of the second conductive material S_{c2} means the value obtained by multiplying the specific surface area (m²/g) of the second conductive material by the weight (g) of the second conductive material. The specific surface area can be measured using the BET (Brunauer-Emmett-Teller) method. For example, it can be measured using the BET 6-point method by nitrogen gas adsorption-desorption analysis with a porosimetry analyzer (Bell Japan Inc, Belsorp-II mini).

In some embodiments, the specific surface area of the first silicon-based active material may be in the range of about 3 m²/g to about 25 m²/g or about 5 m²/g to about 20 m²/g. In some embodiments, the specific surface area of the second silicon-based active material may be in the range of about 3 m²/g to about 25 m²/g or about 5 m²/g to about 20 m²/g. In some embodiments, the specific surface area of the first conductive material may be in the range of about 200 m²/g to about 2000 m²/g. In some embodiments, the specific surface area of the first conductive material may be less than about 1900 m²/g, approximately 1800 m²/g or less, approximately 1700 m²/g or less, approximately 1600 m²/g or less, approximately 1500 m²/g or less, approximately 1400 m²/g or less, approximately 1300 m²/g or less, or approximately 1200 m²/g or less. In some embodiments, the specific surface area of the first conductive material may be 220 m²/g or more, 240 m²/g or more, 260 m²/g or more, 280 m²/g or more, or 300 m²/g or more. In some embodiments, the specific surface area of the second conductive material may be in the range of about 200 m²/g to about 2000 m²/g. In some embodiments, the specific surface area of the second conductive material may be about 1900 m²/g or less, about 1800 m²/g or less, about 1700 m²/g or less, about 1600 m²/g or less, about 1500 m²/g or less, about 1400 m²/g or less, about 1300 m²/gor less, or about 1200 m²/gor less. In some embodiments, the specific surface area of the second conductive material may be 220 m²/g or more, 240 m²/g or more, 260 m²/g or more, 280 m²/g or more, or 300 m²/g or more.

In some embodiments, the ratio S_{ct}/Sₛₜ of the sum of the surface areas of the first and second conductive materials S_{ct} to the sum of the surface areas of the first and second silicon-based active materials Sₛₜ may be in the range of 0.8 to 1.2. If the ratio S_{ct}/Sₛₜ of the sum of the surface areas of the first and second conductive materials S_{ct} to the sum of the surface areas of the first and second silicon-based active materials Sₛₜ is too low or too high, the cycle characteristics may deteriorate. In some embodiments, the ratio S_{ct}/Sₛₜ of the sum of the surface areas of the first and second conductive materials S_{ct} to the sum of the surface areas of the first and second silicon-based active materials Sₛₜ may be in the range of 0.9 to 1.1.

In some embodiments, the ratio S_{c1}/Sₛ₁ of the sum of the surface areas of the first conductive materials S_{c1} to the sum of the surface areas of the first silicon-based active material Sₛ₁ may be in the range of 0.8 to 1.2. If the ratio S_{c1}/Sₛ₁ of the sum of the surface area of the first conductive material S_{c1} to the sum of the surface area of the first silicon-based active material Sₛ₁ is too low or too high, the cycle characteristics may deteriorate. In some embodiments, the ratio S_{c1}/Sₛ₁ of the total surface area of the first conductive material S_{c1} to the total surface area of the first silicon-based active material Sₛ₁ may be in the range of 0.9 to 1.1.

In some embodiments, the ratio S_{c2}/Sₛ₂ of the sum of the surface area S_{c2} of the second conductive material to the sum of the surface area Sₛ₂ of the second silicon-based active material may be in the range of 0.8 to 1.2. If the ratio S_{c2}/Sₛ₂ of the sum of the surface area of the second conductive material S_{c2} to the sum of the surface area of the second silicon-based active material Sₛ₂ is too low or too high, the cycle characteristics may deteriorate. In some embodiments, the ratio S_{c2}/Sₛ₂ of the sum of the surface area S_{c2} of the second conductive material to the sum of the surface area Sₛ₂ of the second silicon-based active material may be in the range of 0.9 to 1.1.

In this specification, the viscosity of the binder refers to the viscosity at room temperature of a dispersion (containing approximately 30 to approximately 40 wt% solids) of the binder dispersed in a solvent such as water or NMP.

In some embodiments, the first active material layer may contain a first binder, and the second active material layer may contain a second binder. The viscosity of the first binder may be greater than the viscosity of the second binder. The adhesive strength of the first binder may be greater than that of the second binder. As described above, the content of the first silicon-based active material may be greater than that of the second silicon-based active material. That is, when charging and discharging are repeated several times, the volume change of the first active material layer may be greater than the volume change of the second active material layer. At this time, if the first active material layer contains a binder with high viscosity and excellent adhesion, the volume change can be suppressed. Accordingly, the cycle characteristics of some embodiments may be improved.

In some embodiments, the viscosity of the first binder may be 10 times or more than the viscosity of the second binder. In some embodiments, the viscosity of the first binder may be 20 times or more, 30 times or more, 40 times or more, 50 times or more, 60 times or more, 70 times or more, or 80 times or more, 90 times or more than the viscosity of the second binder. In some embodiments, the viscosity of the first binder may be 200 times or less, 190 times or less, 180 times or less, 170 times or less, 160 times or less, 150 times or less, 140 times or less, 130 times or less, 120 times or less, or 110 times or less of the viscosity of the second binder. If the viscosity of the first binder is too large relative to the viscosity of the second binder, the electrical resistance of the first active material layer may increase due to the first binder. In some embodiments, the viscosity of the first binder may be about 800 cps to about 1200 cps, about 900 cps to about 1100 cps, about 950 cps to about 1050 cps, or about 990 cps to about 1010 cps. In some embodiments, the viscosity of the second binder may be from about 5 cps to about 15 cps, from about 7 cps to about 13 cps, or from about 9 cps to about 11 cps.

In some embodiments, the weight-average molecular weight of the first binder may be greater than the weight-average molecular weight of the second binder. In some embodiments, the weight-average molecular weight of the first binder may be in the range of about 200 kDa to about 600 kDa. In some embodiments, the weight-average molecular weight of the first binder may be about 210 kDa or more, about 220 kDa or more, about 230 kDa or more, about 240 kDa or more, about 250 kDa or more, about 260 kDa or more, about 270 kDa or more, about 280 kDa or more, about 290 kDa or more, or about 300 kDa or more. In some embodiments, the weight-average molecular weight of the first binder may be approximately 550 kDa or less, approximately 500 kDa or less, approximately 450 kDa or less, approximately 400 kDa or less, or approximately 350 kDa or less. In some embodiments, the weight-average molecular weight of the second binder may be in the range of about 50 kDa to about 300 kDa. In some embodiments, the weight-average molecular weight of the second binder may be about 100 kDa or more, about 110 kDa or more, about 120 kDa or more, or about 130 kDa or more. In some embodiments, the weight-average molecular weight of the second binder may be about 250 kDa or less, about 200 kDa or less, about 190 kDa or less, or about 180 kDa or less.

In some embodiments, the first binder and the second binder each include one or more among polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene terpolymer, acrylic copolymer, styrene-butadiene rubber, and styrene-butadiene rubber-carboxymethyl cellulose fluororubber. In some embodiments, each of the first binder and the second binder may include one or more of an acrylic copolymer and a styrene-butadiene rubber. In some embodiments, each of the first binder and the second binder may include a mixture of an acrylic copolymer and a styrene-butadiene rubber.

In some embodiments, the first active material layer may include a first thickener and the second active material layer may include a second thickener. As non-limiting examples, the first thickener and the second thickener may each include carboxymethylcellulose (CMC). In some embodiments, the sum of the content of the first thickener and the content of the second thickener, based on the sum of the weight of the first active layer and the weight of the second active layer, may be in the range of about 0.05 wt% to about 2 wt%. In some embodiments, the sum of the content of the first thickener and the content of the second thickener, based on the sum of the weight of the first active layer and the weight of the second active layer, may be 0.06 wt% or more, 0.07 wt% or more, 0.08 wt% or more, 0.09 wt% or more, or 0.1 wt% or more. In some embodiments, the sum of the contents of the first thickener and the second thickener, based on the sum of the weights of the first active material layer and the second active material layer, may be 1.8 wt% or less, 1.6 wt% or less, 1.4 wt% or less, or 1.2 wt% or less.

In some embodiments, the first active material layer may contain a first carbon-based active material, and the second active material layer may contain a second carbon-based active material. The first carbon-based active material and the second carbon-based active material may each include natural graphite and synthetic graphite. The content of natural graphite within the first carbon-based active material may be greater than the content of synthetic graphite. The content of synthetic graphite within the second carbon-based active material may be greater than the content of natural graphite. That is, the lower layer may contain more natural graphite than synthetic graphite, while the upper layer may contain more synthetic graphite than natural graphite. Generally, synthetic graphite has lower sphericity compared to natural graphite. Synthetic graphite with relatively low sphericity does not compact well during rolling, increasing the porosity of the active material layer. Conversely, natural graphite with relatively high sphericity is easily rolled, reducing the porosity of the active material layer. To facilitate lithium ion movement within the electrode and increase lithium ion diffusion rates, it is desirable for the porosity of the upper layer to be greater than that of the lower layer. Consequently, some embodiments may exhibit excellent cycle characteristics, low-temperature charge/discharge performance, and rapid charge/discharge performance.

In some embodiments, the weight ratio of natural graphite to synthetic graphite within the first carbon-based active material may be in the range of 60:40 to 90:10. In some embodiments, the weight ratio of natural graphite to synthetic graphite within the first carbon-based active material may be in the range of 60:40 to 80:20. In some embodiments, the weight ratio of natural graphite to synthetic graphite within the first carbon-based active material may be in the range of 60:40 to 70:30. In some embodiments, the content of natural graphite to synthetic graphite within the second carbon-based active material may be in the range of 10:90 to 40:60. In some embodiments, the content of natural graphite and synthetic graphite within the second carbon-based active material may be in the range of 10:90 to 30:70. In some embodiments, the content of natural graphite and synthetic graphite within the second carbon-based active material may be in the range of 10:90 to 20:80.

In some embodiments, the sphericity of the natural graphite may be 0.92 or higher, 0.93 or higher, or 0.94 or higher. In some embodiments, the sphericity of the natural graphite may be 0.97 or less, or 0.96 or less. In some embodiments, the sphericity of the synthetic graphite may be 0.6 or more, 0.65 or more, or 0.7 or more. In some embodiments, the sphericity of the synthetic graphite may be 0.91 or less, or 0.9 or less. The sphericity can be calculated using instruments such as SEM. Specifically, the ratio of the circumference of a circle with the same area as the graphite particle imaged by SEM to the perimeter of the graphite particle imaged by SEM is the sphericity of the graphite particle. In this case, the arithmetic mean value of the sphericity for approximately 10,000 graphite particles can be considered the sphericity of the sample.

### Secondary Battery

A secondary battery may include a positive electrode, a negative electrode, and a separator interposed between the positive electrode and negative electrode. As the negative electrode has been described above, its explanation is omitted here.

The positive electrode may include a positive electrode current collector and a positive electrode active material layer.

The description of the positive electrode current collector is substantially identical to the description of the negative electrode current collector above; therefore, further explanation is omitted. However, in some embodiments, the positive electrode current collector may include aluminum.

The positive electrode active material layer may include a positive electrode active material, a binder, and a conductive material. The description of the binder and conductive material is substantially identical to that described above, so further explanation is omitted. However, in some embodiments, the positive electrode active material layer may include polyvinylidene fluoride as the binder. The positive electrode active material layer may include a thickener. The description of the thickener is substantially the same as described above, so further explanation is omitted.

In some embodiments, the positive electrode active material may be represented by the following Chemical Formula 1.

[Chemical Formula 1] LiₚNi_{1-q-r-s}Co_{q}MnᵣM¹ₛO₂

In Chemical Formula 1,
M¹ is one or more elements selected from the group consisting of Al, Zr, Ti, Mg, Ta, Nb, Mo, and Cr, and
0.9≤p≤1.5, 0≤q≤1, 0≤r≤0.5, 0≤s≤0.1, 0≤q+r+s≤1.

In some embodiments, the positive electrode may include a positive electrode active material represented by the following Chemical Formula 2:

[Chemical Formula 2] Li₁₊ₐFe_{1-b}M²_{b}(PO_{4-c})X_{c}

In Chemical Formula 2,
M² comprises one or two or more elements selected from the group consisting of Al, Mg, Ni, Co, Mn, Ti, Ga, Cu, V, Nb, Zr, Ce, In, Zn, and Y,
X comprises one or two or more elements selected from the group consisting of F, S, and N, and
a, b, and c are within the ranges -0.5 ≤ a ≤ 0.5, 0 ≤ b ≤ 0.9, and 0 ≤ x ≤ 0.8, respectively.

In some embodiments, the secondary battery may be cylindrical. Here, cylindrical refers to the three-dimensional shape of the battery case. The cylindrical secondary battery may include a jelly roll-type electrode assembly wound with a separator interposed between the positive and negative electrodes.

In some embodiments, the secondary battery may be for automotive use or for an ESS (Energy Storage System).

The following describes the examples by comparison with comparative examples.

### <Examples and Comparative Examples>

### Example 1-1

A first silicon-based active material comprising SiO, a first carbon-based active material comprising natural graphite and synthetic graphite, a first binder with a viscosity of approximately 1000 cps, a first thickener comprising CMC, and a first conductive material comprising single-walled carbon nanotubes (average length 5 µm) were added to distilled water and mixed (solid content 33.3 wt%) to prepare a first negative electrode slurry. The SiO content based on the solid content in the first negative electrode slurry was 15.7 wt%. The ratio S_{c1}/Sₛ₁ of the sum of the surface area S_{c1} of the single-walled carbon nanotubes to the sum of the surface area Sₛ₁ of the SiO contained in the first negative electrode slurry was approximately 1.0.

A second silicon-based active material comprising SiO, a second carbon-based active material comprising natural graphite and synthetic graphite, a second binder with a viscosity of approximately 10 cps, a second thickener comprising CMC, and a second conductive material comprising single-walled carbon nanotubes (average length 5 µm) were added to distilled water and mixed (solid content 33.3 wt%) to prepare a second negative electrode slurry. The SiO content in the second negative electrode slurry was set to 9.9 wt% based on the solid content. The ratio S_{c2}/Sₛ₂ of the sum of the surface area S_{c2} of the single-walled carbon nanotubes to the sum of the surface area Sₛ₂ of the SiO contained in the second negative electrode slurry was approximately 1.0.

A negative electrode including a first active material layer (lower layer) and a second active material layer (upper layer) was prepared by applying the first negative electrode slurry onto a copper thin film, applying the second negative electrode slurry onto the first negative electrode slurry, and then drying. The thickness ratio of the first active material layer to the second active material layer was 1:1.

Li(Ni_{0.8}MN_{0.1}CO_{0.1})0₂ was used as the positive electrode active material, polyvinylidene fluoride was used as the binder, and carbon black was used as the conductive material. These were mixed in a weight ratio of 96:2:2 in N-methylpyrrolidone (NMP) to prepare a positive electrode slurry (solid content 70 wt%). The positive electrode slurry was applied onto an aluminum foil and dried to prepare a positive electrode.

The positive electrode, separator, and negative electrode were sequentially laminated and wound to form an electrode assembly. The electrode assembly was placed in a cylindrical case, filled with electrolyte, and a cylindrical secondary battery was manufactured.

### Examples 1-2 to 1-5 and Comparative Examples 1-1 to 1-3

Examples 1-2 to 1-5 and Comparative Examples 1-2 to 1-3 were prepared by manufacturing cylindrical secondary batteries identical to Example 1-1, except that S_{c1}/Sₛ₁ and S_{c2}/Sₛ₂ were varied (see Table 1).

Comparative Example 1-1 was manufactured identically to Example 1-1, except that the SiO content based on the solid content in the first negative electrode slurry and the SiO content based on the solid content in the second negative electrode slurry were varied (see Table 1).

**[Table 1]**

| - | - | SiO Content | S_{c1}/Sₛ₁ | S_{c2}/Sₛ₂ |
|---|---|---|---|---|
| Example 1-1 | First active material layer (lower layer) | 15.7 | 1.0 | - |
| | Second active material layer (upper layer) | 9.9 | - | 1.0 |
| Example 1-2 | First active material layer (lower layer) | 15.7 | 0.82 | - |
| | Second active material layer (upper layer) | 9.9 | - | 0.84 |
| Example 1-3 | First active material layer (lower layer) | 15.7 | 0.92 | - |
| | Second active material layer (upper layer) | 9.9 | - | 0.90 |
| Example 1-4 | First active material layer (lower layer) | 15.7 | 1.05 | - |
| | Second active material layer (upper layer) | 9.9 | - | 1.10 |
| Example 1-5 | First active material layer (lower layer) | 15.7 | 1.18 | - |
| | Second active material layer (upper layer) | 9.9 | - | 1.16 |
| Comparative Example 1-1 | First active material layer (lower layer) | 12.8 | 1.0 | - |
| | Second active material layer (upper layer) | 12.8 | - | 1.0 |
| Comparative Example 1-2 | First active material layer (lower layer) | 15.7 | 0.75 | - |
| | Second active material layer (upper layer) | 9.9 | - | 0.72 |
| Comparative Example 1-3 | First active material layer (lower layer) | 15.7 | 1.26 | |
| | Second active material layer (upper layer) | 9.9 | | 1.24 |

### Examples 2-1 to 2-5 and Comparative Examples 2-1 to 2-2

A cylindrical secondary battery was manufactured identically to Example 1-1, except that the SiO content was set to 15 wt% based on the solids in the first negative electrode slurry and 5 wt% based on the solids in the second negative electrode slurry, and S_{c1}/Sₛ₁ and S_{c2}/Sₛ₂ were varied as shown in Table 2 below.

**[Table 2]**

| - | S_{c1}/Sₛ₁ | S_{c2}/Sₛ₂ |
|---|---|---|
| Example 2-1 | 1.0 | 1.0 |
| Example 2-2 | 0.80 | 0.83 |
| Example 2-3 | 0.94 | 0.92 |
| Example 2-4 | 1.08 | 1.09 |
| Example 2-5 | 1.13 | 1.17 |
| Comparative Example 2-1 | 0.71 | 0.75 |
| Comparative Example 2-2 | 1.22 | 1.23 |

### Examples 3-1 to 3-5 and Comparative Examples 3-1 to 3-2

A cylindrical secondary battery was manufactured identically to Example 1-1, except that the SiO content was set to 20 wt% based on the solids in the first negative electrode slurry and 10 wt% based on the solids in the second negative electrode slurry, and S_{c1}/Sₛ₁ and S_{c2}/Sₛ₂ were varied as shown in Table 3 below.

**[Table 3]**

| - | S_{c1}/Sₛ₁ | S_{c2}/Sₛ₂ |
|---|---|---|
| Example 3-1 | 1.0 | 1.0 |
| Example 3-2 | 0.84 | 0.81 |
| Example 3-3 | 0.94 | 0.91 |
| Example 3-4 | 1.08 | 1.07 |
| Example 3-5 | 1.16 | 1.18 |
| Comparative Example 3-1 | 0.72 | 0.77 |
| Comparative Example 3-2 | 1.26 | 1.24 |

### Examples 4-1 to 4-5 and Comparative Examples 4-1 to 4-2

A cylindrical secondary battery was manufactured identically to Example 1-1, except that the SiO content was set to 32 wt% based on the solids in the first negative electrode slurry and 8 wt% based on the solids in the second negative electrode slurry, and S_{c1}/Sₛ₁ and S_{c2}/Sₛ₂ were varied as shown in Table 4 below.

**[Table 4]**

| - | S_{c1}/Sₛ₁ | S_{c2}/Sₛ₂ |
|---|---|---|
| Example 4-1 | 1.0 | 1.0 |
| Example 4-2 | 0.81 | 0.83 |
| Example 4-3 | 0.93 | 0.90 |
| Example 4-4 | 1.09 | 1.07 |
| Example 4-5 | 1.18 | 1.18 |
| Comparative Example 4-1 | 0.77 | 0.73 |
| Comparative Example 4-2 | 1.26 | 1.25 |

### <Experimental Examples>Experimental Example 1: Cycle Characteristics, Low-Temperature Charge/Discharge Performance, and Rapid Charge/Discharge Performance According to the Content of First Silicon-Based Active Material and Second Silicon-Based Active Material

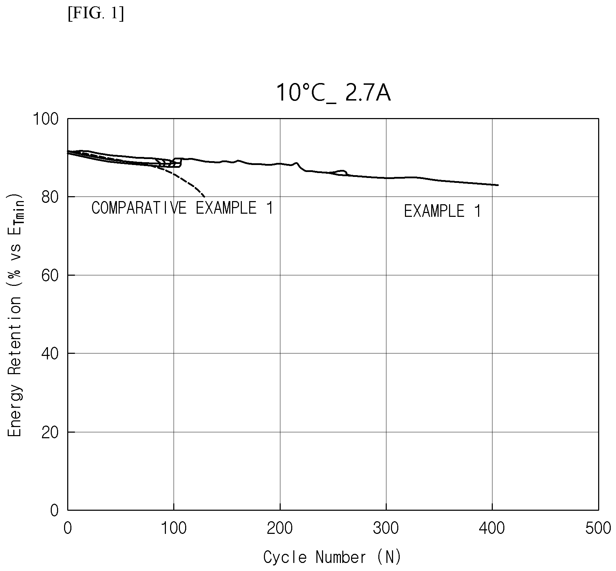

The energy retention rate of Example 1-1 and Comparative Example 1-1 was evaluated by performing multiple rapid charge-discharge cycles at 2.7 A and 10°C. The results are shown in FIG. 1.

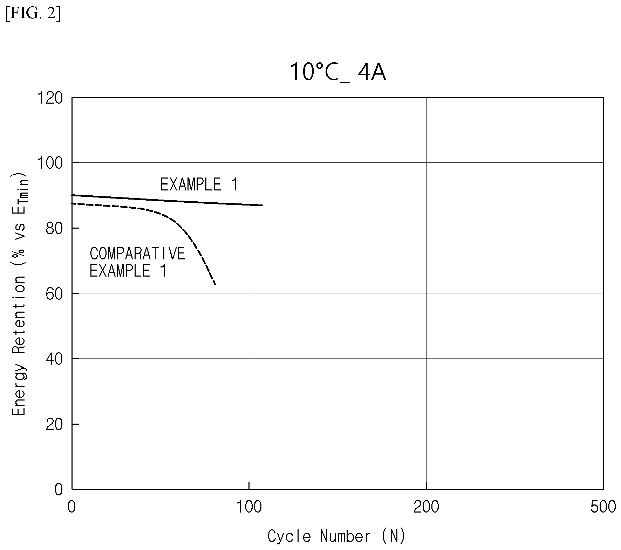

The energy retention rate of the cycles of Example 1-1 and Comparative Example 1-1 was evaluated by performing multiple rapid charge-discharge cycles at 10°C and 4.0 A. The results are shown in FIG. 2.

Referring to FIGS. 1 and 2, it can be seen that Example 1-1, where the content of the first silicon-based active material is greater than that of the second silicon-based active material, exhibits superior energy retention rate compared to Comparative Example 1-1, where the content of the first silicon-based active material is the same as that of the second silicon-based active material.

### Experimental Example 2: Degradation Degree of SiO in the First Active Material Layer (Lower Layer) and Second Active Material Layer (Upper Layer) According to the Content of the First Silicon-Based Active Material and the Second Silicon-Based Active Material

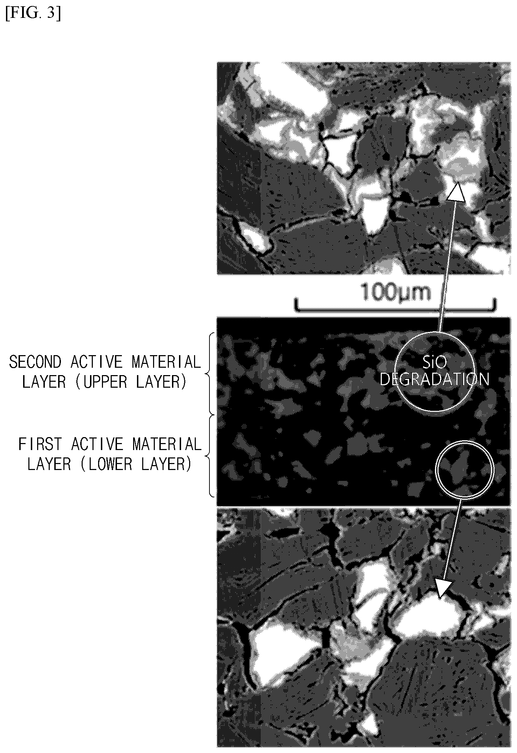

After subjecting Comparative Example 1-1 to multiple charge-discharge cycles (approximately 100 cycles) at a low temperature (approximately 10°C) and then disassembling it, the first active material layer (lower layer) and the second active material layer (upper layer) were photographed using SEM. The photographed images are shown in FIG. 3.

Referring to FIG. 3, it can be seen that the SiO in the second active material layer (upper layer) forms LiₓSi crystalline structures that cause SiO degradation, and the second active material layer (upper layer) has more byproducts compared to the first active material layer (lower layer). That is, the second active material layer (upper layer) contains a large amount of electrochemically isolated SiO, indicating a high proportion of unreacted parts, and lithium ions are lost from the second active material layer (upper layer).

This is because lithium ion diffusion is reduced during charging at low temperatures, making it difficult for lithium ions to migrate to the first active material layer (lower layer). In Comparative Example 1-1, the content of the second silicon-based active material is the same as that of the first silicon-based active material, leading to overuse of the second silicon-based active material within the second active material layer (upper layer). Therefore, it can be understood that Example 1-1, where the content of the first silicon-based active material is greater than that of the second silicon-based active material, will exhibit superior cycle characteristics compared to Comparative Example 1-1, where the contents of the two silicon-based active materials are equal.

### Experimental Example 3: Cycle Characteristics According to S_{c1}/Sₛ₁ and S_{c2}/Sₛ₂

Examples 1-1 to 1-5, Comparative Examples 1-2 to 1-3, Examples 2-1 to 2-5, Comparative Examples 2-1 to 2-2, Examples 3-1 to 3-5, Comparative Examples 3-1 to 3-2, Examples 4-1 to 4-5, and Comparative Examples 4-1 to 4-2 were charged at 0.5C constant current (CC) at 25 °C (cut-off voltage 4.2V), followed by CV (constant voltage) charging (cut-off current 0.0125C), and then discharged at 0.5C (cut-off voltage 2.5V). This charge-discharge cycle was repeated 100 times, after which the capacity retention rate was evaluated. The results are shown in Table 5.

Examples 1-1 to 1-5, Comparative Examples 1-2 to 1-3, Examples 2-1 to 2-5, Comparative Examples 2-1 to 2-2, Examples 3-1 to 3-5, Comparative Examples 3-1 to 3-2, Examples 4-1 to 4-5 and Comparative Examples 4-1 to 4-2 were CC charged at 0.5C at 25°C (cut-off voltage 4.2V), CV charged (cut-off current 0.0125C), and then discharged at 2.0C (cut-off voltage 2.5V). After repeating this charge-discharge cycle 100 times, the capacity retention rate was evaluated. The results are shown in Table 6.

**[Table 5]**

| | S_{c1}/Sₛ₁ | S_{c2}/Sₛ₂ | Capacity retention rate (%) (0.5C/0.5C) |
|---|---|---|---|
| Comparative Example 1-2 | 0.75 | 0.72 | 77 |
| Example 1-2 | 0.82 | 0.84 | 82 |
| Example 1-3 | 0.92 | 0.90 | 86 |
| Example 1-1 | 1.0 | 1.0 | 89 |
| Example 1-4 | 1.05 | 1.10 | 84 |
| Example 1-5 | 1.18 | 1.16 | 82 |
| Comparative Example 1-3 | 1.26 | 1.24 | 72 |
| Comparative Example 2-1 | 0.71 | 0.75 | 75 |
| Example 2-2 | 0.80 | 0.83 | 81 |
| Example 2-3 | 0.94 | 0.92 | 85 |
| Example 2-1 | 1.0 | 1.0 | 87 |
| Example 2-4 | 1.08 | 1.09 | 83 |
| Example 2-5 | 1.13 | 1.17 | 82 |
| Comparative Example 2-2 | 1.22 | 1.23 | 65 |
| Comparative Example 3-1 | 0.72 | 0.77 | 86 |
| Example 3-2 | 0.84 | 0.81 | 88 |
| Example 3-3 | 0.94 | 0.91 | 89 |
| Example 3-1 | 1.0 | 1.0 | 91 |
| Example 3-4 | 1.08 | 1.07 | 90 |
| Example 3-5 | 1.16 | 1.18 | 87 |
| Comparative Example 3-2 | 1.26 | 1.24 | 79 |
| Comparative Example 4-1 | 0.77 | 0.73 | 61 |
| Example 4-2 | 0.81 | 0.83 | 72 |
| Example 4-3 | 0.93 | 0.90 | 75 |
| Example 4-1 | 1.0 | 1.0 | 87 |
| Example 4-4 | 1.09 | 1.07 | 86 |
| Example 4-5 | 1.18 | 1.18 | 84 |
| Comparative Example 4-2 | 1.26 | 1.25 | 67 |

**[Table 6]**

| | S_{c1}/Sₛ₁ | S_{c2}/Sₛ₂ | Capacity retention rate (%) (0.5C/2.0C) |
|---|---|---|---|
| Comparative Example 1-2 | 0.75 | 0.72 | 77 |
| Example 1-2 | 0.82 | 0.84 | 83 |
| Example 1-3 | 0.92 | 0.90 | 84 |
| Example 1-1 | 1.0 | 1.0 | 88 |
| Example 1-4 | 1.05 | 1.10 | 85 |
| Example 1-5 | 1.18 | 1.16 | 81 |
| Comparative Example 1-3 | 1.26 | 1.24 | 76 |
| Comparative Example 2-1 | 0.71 | 0.75 | 78 |
| Example 2-2 | 0.80 | 0.83 | 82 |
| Example 2-3 | 0.94 | 0.92 | 85 |
| Example 2-1 | 1.0 | 1.0 | 87 |
| Example 2-4 | 1.08 | 1.09 | 84 |
| Example 2-5 | 1.13 | 1.17 | 80 |
| Comparative Example 2-2 | 1.22 | 1.23 | 77 |
| Comparative Example 3-1 | 0.72 | 0.77 | 79 |
| Example 3-2 | 0.84 | 0.81 | 81 |
| Example 3-3 | 0.94 | 0.91 | 83 |
| Example 3-1 | 1.0 | 1.0 | 85 |
| Example 3-4 | 1.08 | 1.07 | 82 |
| Example 3-5 | 1.16 | 1.18 | 80 |
| Comparative Example 3-2 | 1.26 | 1.24 | 75 |
| Comparative Example 4-1 | 0.77 | 0.73 | 74 |
| Example 4-2 | 0.81 | 0.83 | 81 |
| Example 4-3 | 0.93 | 0.90 | 87 |
| Example 4-1 | 1.0 | 1.0 | 92 |
| Example 4-4 | 1.09 | 1.07 | 90 |
| Example 4-5 | 1.18 | 1.18 | 89 |
| Comparative Example 4-2 | 1.26 | 1.25 | 77 |

Referring to Table 5 and Table 6, it can be seen that the Examples where S_{ct}/Sₛₜ is between 0.8 and 1.2 exhibit superior capacity retention rate compared to the Comparative Examples where S_{ct}/Sₛₜ is less than 0.8 or exceeds 1.2. Furthermore, it can be seen that the closer S_{ct}/Sₛₜ is to 1, the better the capacity retention rate becomes.

### Experimental Example 4: Cycle Characteristics According to Linear Conductive Material Length

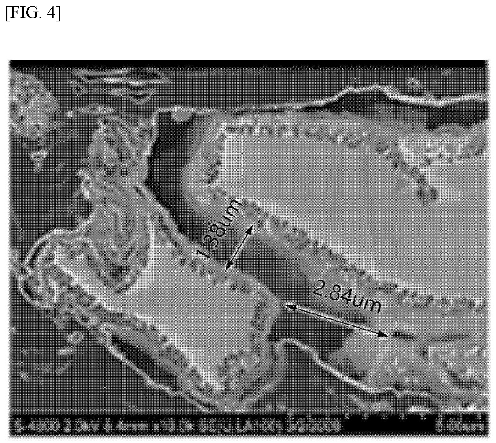

After performing 200 charge-discharge cycles at 1C on Example 2-1 and disassembling it, the first active material layer (lower layer) was photographed using SEM. The photographed image is shown in FIG. 4.

Referring to FIG. 4, it can be seen that the pore size within the first active material layer (lower layer) is approximately 1.38 µm to approximately 2.84 µm. Therefore, it can be understood that a linear conductive material length of 5 µm or more is desirable.

The foregoing description is merely illustrative of the present disclosure. The scope of the present disclosure should be interpreted by the claims, and all technical ideas within the scope of the claims or within the scope of equivalents should be interpreted as falling within the scope of the disclosure.

## Claims

1. A negative electrode for a secondary battery comprising:
a current collector; a first active material layer on the current collector; and a second active material layer on the first active material layer, wherein
the first active material layer comprises a first silicon-based active material and a first conductive material,
the second active material layer comprises a second silicon-based active material and a second conductive material, wherein
the content of the first silicon-based active material is greater than the content of the second silicon-based active material, and
the ratio (S_{ct}/Sₛₜ) of the sum of the surface areas of the first and second conductive materials S_{ct} to the sum of the surface areas of the first and second silicon-based active materials Sₛₜ is in the range of 0.8 to 1.2.

2. The negative electrode for a secondary battery of claim 1, wherein
the content of the first conductive material is greater than the content of the second conductive material.

3. The negative electrode for a secondary battery of claim 1, wherein
the ratio (S_{c1}/Sₛ₁) of the sum of the surface areas of the first conductive material S_{c1} to the sum of the surface areas of the first silicon-based active material Sₛ₁ is in the range of 0.8 to 1.2, and
the ratio (S_{c2}/Sₛ₂) of the sum of the surface areas of the second conductive material S_{c2} to the sum of the surface areas of the second silicon-based active material Sₛ₂ is in the range of 0.8 to 1.2.

4. The negative electrode for a secondary battery of claim 1, wherein
the ratio (S_{c1}/Sₛ₁) of the sum of the surface areas of the first conductive material S_{c1} to the sum of the surface areas of the first silicon-based active material Sₛ₁ is in the range of 0.9 to 1.1, and
the ratio (S_{c2}/Sₛ₂) of the sum of the specific surface areas of the second conductive material S_{c2} to the sum of the surface areas of the second silicon-based active material Sₛ₂ is in the range of 0.9 to 1.1.

5. The negative electrode for a secondary battery of claim 1, wherein
the first and second conductive materials comprise linear conductive materials.

6. The negative electrode for a secondary battery of claim 5, wherein
the linear conductive material comprises one or more among carbon nanotubes (CNT), carbon nanofibers (CNF), and vapor-grown carbon fibers (VGCF).

7. The negative electrode for a secondary battery of claim 5, wherein
the linear conductive material has an average length of 5 µm or more.

8. The negative electrode for a secondary battery of claim 1, wherein
the first active material layer comprises a first binder,
the second active material layer comprises a second binder, and
the viscosity of the first binder is greater than the viscosity of the second binder.

9. The negative electrode for a secondary battery of claim 8, wherein
the viscosity of the first binder is at least ten times greater than the viscosity of the second binder.

10. The negative electrode for a secondary battery of claim 1, wherein
the first active material layer comprises a first carbon-based active material,
the second active material layer comprises a second carbon-based active material,
the first and second carbon-based active materials comprise natural graphite and synthetic graphite, wherein
the content of natural graphite within the first carbon-based active material is greater than the content of synthetic graphite, and
the content of synthetic graphite within the second carbon-based active material is greater than the content of natural graphite.

11. A secondary battery comprising:
a positive electrode, a negative electrode, and a separator interposed between the positive electrode and the negative electrode, wherein
the negative electrode is the negative electrode according to claim 1.

12. The secondary battery of claim 11, wherein
the positive electrode comprises a positive electrode active material represented by the following Chemical Formula 1:
[Chemical Formula 1] LiₚNi_{1-q-r-s}Co_{q}MnᵣM¹ₛO₂
In Chemical Formula 1,
M¹ is one or more elements selected from the group consisting of Al, Zr, Ti, Mg, Ta, Nb, Mo, and Cr, and
0.9≤p≤1.5, 0≤q≤1, 0≤r≤0.5, 0≤s≤0.1, 0≤q+r+s≤1.

13. The secondary battery of claim 11, wherein
the positive electrode comprises a positive electrode active material represented by the following Chemical Formula 2:
[Chemical Formula 2] Li₁₊ₐFe_{1-b}M²₈(PO_{4-c})X_{c}
In Chemical Formula 2,
M² comprises one or two or more elements selected from the group consisting of Al, Mg, Ni, Co, Mn, Ti, Ga, Cu, V, Nb, Zr, Ce, In, Zn, and Y,
X comprises one or two or more elements selected from the group consisting of F, S, and N, and
a, b, and c are within the ranges -0.5 ≤ a ≤ 0.5, 0 ≤ b ≤ 0.9, and 0 ≤ x ≤ 0.8, respectively.

14. The secondary battery of claim 11, wherein
the secondary battery is a cylindrical secondary battery.

15. The secondary battery of claim 11, wherein
the secondary battery is a secondary battery for automotive use or for an ESS (Energy Storage System).
